# EUROPÄISCHE PATENTANMELDUNG

(11) **EP 4 567 845 A1**
(43) Veröffentlichungstag der Anmeldung: **11.06.2025**
(21) Anmeldenummer: 24171002.9
(22) Anmeldetag: 18.04.2024
(51) Int. Cl.: H01H 9/02, H02G 3/12, H01H 9/16, H02G 3/08

(54) **GEBÄUDEINSTALLATIONSGERÄTESYSTEM**

(30) Priorität: 05.12.2023 DE 102023133998
(71) Anmelder: Insta GmbH, 58509 Lüdenscheid (DE)
(72) Erfinder:

(57) **Zusammenfassung**

Vorgestellt wird ein Gebäudeinstallationsgerätesystem umfassend einen, auf einen in einer Dose D festgelegten Schalter- oder Tastereinsatz E aufsetzbaren, Aufsatz A, sowie ein elektrisches Gerät E2, das eine Energieversorgung, einen Sender und Detektionsmittel zur Erfassung der Schalt- beziehungsweise Tastbetätigung des Schalter- oder Tastereinsatzes E aufweist.

Besonders dabei ist, dass der Schalter- oder Tastereinsatz E einen unebenen Gehäuseboden mit einer Vertiefung V mit einem Vertiefungsvolumen von mindestens 2 cm³ aufweist und das elektrische Gerät E2 einen ersten Abschnitt A1 mit einem Abschnittsvolumen von mindestens 2 cm³ aufweist, welcher erste Abschnitt A1 zu mindestens 80% seines Abschnittsvolumens in die Vertiefung V eintaucht.

## Beschreibung

Die Erfindung betrifft ein Gebäudeinstallationsgerätesystem umfassend einen, auf einen in einer Dose festgelegten Schalter- oder Tastereinsatz aufsetzbaren, Aufsatz, sowie ein elektrisches Gerät, das eine Energieversorgung, einen Sender und Detektionsmittel zur Erfassung der Schalt- beziehungsweise Tastbetätigung des Schalter- oder Tastereinsatzes aufweist.

Ein gattungsgemäßes Gebäudeinstallationsgerätesystem, dient dazu, Lampen zu schalten, zu dimmen oder um Jalousien zu steuern, und zwar auch fernbedienbar, beispielsweise via Endgerät. Hierzu weist das Gebäudeinstallationsgerätesystem einen, auf einen in einer Dose festgelegten Schalter- oder Tastereinsatz aufsetzbaren, Aufsatz auf, mit dem ein Anwender eine Vorortbetätigung ausführen kann.

Zur fernbedienbaren Betätigung umfasst das Gebäudeinstallationsgerätesystem ein elektrisches Gerät (z.B. bekannt aus www.tink.de/p/shelly-plus-2pm-4er-set), das eine Energieversorgung, einen Sender und Detektionsmittel zur Erfassung der Schaltbeziehungsweise Tastbetätigung des Schalter- oder Tastereinsatzes aufweist.

Problematisch bei vorbekannten Gebäudeinstallationsgerätesystemen ist, dass die Dimensionierung der elektrischen Geräte nicht an die Geometrie der Schalter- oder Tastereinsätze angepasst ist. Somit wird wertvoller Bauraum verschenkt, so dass die Einbaumöglichkeiten in nicht ausreichend tiefe Dosen nicht ohne weiteres, insbesondere nicht ohne aufwendige Stemmarbeiten, gegeben sind.

Ausgehend von diesem diskutierten Stand der Technik liegt der Erfindung die Aufgabe zugrunde, ein Gebäudeinstallationsgerätesystemen zu schaffen, bei dem Platzbedarf und der Montageaufwand für den Einbau des elektrischen Gerätes abgesenkt ist.

Gelöst wird diese Aufgabe durch ein Gebäudeinstallationsgerätesystem, wobei der Schalter- oder Tastereinsatz einen unebenen Gehäuseboden mit einer Vertiefung mit einem Vertiefungsvolumen von mindestens 2 cm³ aufweist und das elektrische Gerät einen ersten Abschnitt mit einem Abschnittsvolumen von mindestens 2 cm³ aufweist, welcher erste Abschnitt zu mindestens 80% seines Abschnittsvolumens in die Vertiefung eintaucht.

Der Kerngedanke der Erfindung besteht darin, dass bei dem erfindungsgemäßen Gebäudeinstallationsgerätesystem der Schalter- oder Tastereinsatz einen unebenen Gehäuseboden mit einer Vertiefung mit einem Vertiefungsvolumen von mindestens 2 cm³ aufweist.

Gleichzeitig weist das elektrische Gerät einen ersten Abschnitt mit einem Abschnittsvolumen von mindestens 2 cm³ auf, welcher erste Abschnitt zu mindestens 80% seines Abschnittsvolumens in die Vertiefung eintaucht.

Hierdurch wird es auf besonders vorteilhafte und geschickte Art erreicht, dass die Geometrie des Schalter- oder Tastereinsatzes und des elektrischen Gerätes aufeinander abgestimmt sind. Durch das Eintauchen des ersten Abschnitts in die, einen unebenen Gehäuseboden aufweisenden, korrespondierende Vertiefung des Schalter- oder Tastereinsatzes wird der Bauraum besonders effektiv ausgenutzt. So können bestimmte elektrische Komponenten mit einem höheren Bauraumbedarf im elektrischen Gerät in dem ersten Abschnitt untergebracht werden, da dieser besonders effektiv in die korrespondierende Vertiefung des Schalter- oder Tastereinsatzes eintaucht.

In einer besonders bevorzugten Ausführungsform des erfindungsgemäßen Gebäudeinstallationsgerätesystems grenzt an den ersten Abschnitt ein zweiter Abschnitt an, der nicht in die Vertiefung eintaucht, und einen Absatz bezüglich des ersten Abschnitts ausbildet, so dass die Breite des zweiten Abschnitts größer als die Breite des ersten Abschnitts ist. Diese Geometrie erlaubt es, dass elektrische Komponenten im elektrischen Gerät so angeordnet werden, dass breite Komponenten, die eine geringe Höhe aufweisen, vorzugsweise im zweiten Bereich angeordnet werden, während Komponenten mit einer hohen Höhe vorzugsweise im ersten, in die Vertiefung eintauchenden, Abschnitt angeordnet werden.

Gemäß einer bevorzugten Ausführungsform des erfindungsgemäßen Gebäudeinstallationsgerätesystems weist das Vertiefungsvolumen eine Höhe von mindestens 2,5 mm, und eine Grundfläche von mindestens 8 cm² auf. Hierdurch wird ein sehr hohes Maß an geometrischer Kompatibilität bestehender Schalter- oder Tastereinsätze, insbesondere deren Vertiefung, mit dem elektrischen Gerät erreicht.

In einer bevorzugten Ausführungsform des erfindungsgemäßen Gebäudeinstallationsgerätesystems weist das elektrische Gerät eine im Wesentlichen rechteckige Grundfläche mit abgerundeten Ecken und vier Seiten auf, wobei jede Seite maximal drei Anschlüsse für den elektrischen Anschluss eines elektrischen Kabels aufweist. Hierdurch wird es erreicht, dass die Abmessungen des elektrischen Gerätes geschickt so gehalten werden, dass sie in typische Schalter- oder Tastereinsätze, insbesondere deren Vertiefung, hineinpassen.

In einer bevorzugten Ausführungsform des erfindungsgemäßen Gebäudeinstallationsgerätesystems ist der Schalter- oder Tastereinsatz über Befestigungskrallen, die mittels in metallischen Schraubdomen gelagerten Schrauben verstellbar sind, an der Dose festlegbar. Dabei weist das elektrische Gerät einen Befestigungsabschnitt auf, wobei der Befestigungsabschnitt an den ersten Abschnitt angrenzt, wobei der Befestigungsabschnitt zwei metallische Schraubdome aufweist, die so in der Verlängerung der Schraubdome des Schalter- oder Tastereinsatzes angeordnet sind, dass das elektrische Gerät an dem an der Dose festgelegten Schalter- oder Tastereinsatz positionsfixiert ist, indem die Schrauben des Schalter- oder Tastereinsatz in die metallischen Schraubdome des Befestigungsabschnitts greifen. Hierdurch wird die Einfachheit der Montage und auch die Zuverlässigkeit der Ausrichtung des elektrischen Gerätes in der Dose verbessert; auch um ein Verklemmen beim Einsetzen des elektrischen Gerätes mit etwaigem Kabelgut in der Dose zu vermeiden, beispielsweise wenn das elektrische Gerät aufgrund der Schwerkraft dazu tendiert, eine liegende Position anzunehmen. Dabei ist in einer Weiterbildung dieser Ausführungsform vorgesehen, dass die metallischen Schraubdome des zweiten Abschnitts des elektrischen Gerätes wärmeleitend mit elektrischen Komponenten des elektrischen Gerätes verbunden sind und die metallischen Schraubdome des Schalter- oder Tastereinsatzes zur Wärmeabführung kontaktieren. Damit wird im Betrieb anfallende Abwärme des elektrischen Gerätes aus der Dose effektiver heraustransportiert.

In einer bevorzugten Ausführungsform des erfindungsgemäßen Gebäudeinstallationsgerätesystems umfasst die Energieversorgung einen Energiespeicher oder einen Phasenanschluss und einen Neutralleiteranschluss.

Nachfolgend ist die Erfindung unter Bezugnahme auf die beigefügten Figuren anhand diverser Ausführungsbeispiele beschrieben. Es zeigen:
- **Fig. 1:**: eine schematische Draufsicht eines erfindungsgemäßen Gebäudeinstallationsgerätesystems,
- **Fig. 2:**: eine schematische Draufsicht eines weiteren erfindungsgemäßen Gebäudeinstallationsgerätesystems und
- **Fig. 3:**: eine schematische Draufsicht eines weiteren erfindungsgemäßen Gebäudeinstallationsgerätesystems.

In den verschiedenen Figuren sind gleiche Teile stets mit den gleichen Bezugszeichen versehen und werden daher in der Regel auch jeweils nur einmal benannt beziehungsweise erwähnt.

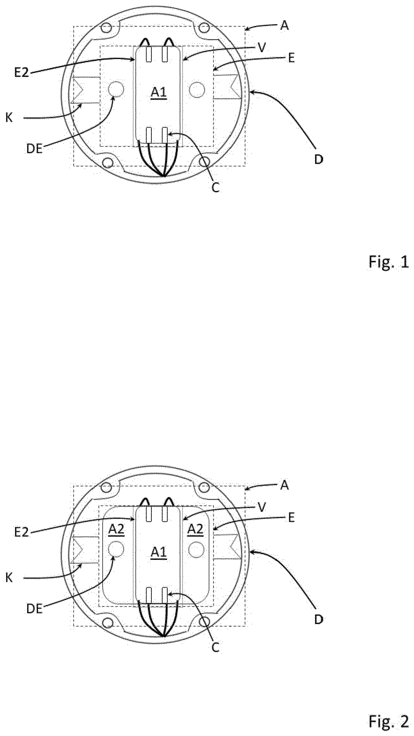

Figur 1 zeigt ein Gebäudeinstallationsgerätesystem umfassend einen, auf einen in einer Dose D festgelegten Schalter- oder Tastereinsatz E aufsetzbaren, Aufsatz A, sowie ein elektrisches Gerät E2, das eine Energieversorgung, einen Sender und Detektionsmittel zur Erfassung der Schalt- beziehungsweise Tastbetätigung des Schalter- oder Tastereinsatzes E aufweist. Zur Fixierung des Schalter- oder Tastereinsatzes E an der Dose D sind Befestigungskrallen K vorgesehen, die über eine in einen Schraubdom DE des Einsatzes E betätigt, insbesondere gespreizt werden können.

Dabei weist das in Figur 1 gezeigte elektrische Gerät E2 eine im Wesentlichen rechteckige Grundfläche mit abgerundeten Ecken und vier Seiten auf, wobei je Seite maximal drei Anschlüsse C für den elektrischen Anschluss eines elektrischen Kabels vorgesehen sind (hier nur zwei Anschlüsse C an zwei gegenüberliegenden Seiten).

Besonders vorteilhaft ist, dass der Schalter- oder Tastereinsatz E einen unebenen Gehäuseboden mit einer Vertiefung V mit einem Vertiefungsvolumen von mindestens 2 cm³ aufweist und das elektrische Gerät E2 einen ersten Abschnitt A1 mit einem Abschnittsvolumen von mindestens 2 cm³ aufweist, welcher erste Abschnitt A1 zu mindestens 80% seines Abschnittsvolumens in die Vertiefung V eintaucht. Hierdurch wird die geometrische Passgenauigkeit zwischen elektrischem Gerät E2 und dem Schalter- oder Tastereinsatz E optimal ausgenutzt (und gleichzeitig der Freiheitsgrad geschaffen, im Schalter- oder Tastereinsatz E und im elektrischem Gerät E2 eine geometrieoptimierte Anordnung vorzunehmen), was bis dato im Stand der Technik nicht erfolgte. Vielmehr wird dort eine solche vorteilhafte geometrische Anpassung gerade nicht vorgenommen.

Figur 2 zeigt ein weiteres Gebäudeinstallationsgerätesystem, bei dem an den ersten Abschnitt A1 ein zweiter Abschnitt A2 angrenzt, der nicht in die Vertiefung V eintaucht, und einen Absatz bezüglich des ersten Abschnitts A1 ausbildet, so dass die Breite des zweiten Abschnitts A2 größer als die Breite des ersten Abschnitts A1 ist. Hierdurch können die Freiheitsgrade der Anordnung bestimmter Komponenten im elektrischen Gerät E2 optimal ausgespielt werden, um den Bauraumbedarf in der Dose D zu verringern. Vorzugsweise ist das elektrische Gerät E2 zur Beeinflussung einer Leuchte oder einer Jalousie geeignet.

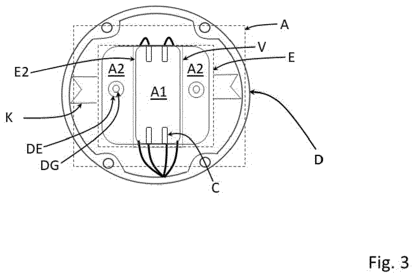

Figur 3 zeigt ein weiteres Gebäudeinstallationsgerätesystem, wobei der Schalter- oder Tastereinsatz E über Befestigungskrallen K, die mittels in metallischen Schraubdomen gelagerten Schrauben verstellbar sind, an der Dose D festlegbar ist. Ferner weist das elektrische Gerät E2 einen Befestigungsabschnitt auf, wobei der Befestigungsabschnitt an den ersten Abschnitt A1 angrenzt, und der Befestigungsabschnitt zwei metallische Schraubdome DG aufweist, die so in der Verlängerung der Schraubdome DE des Schalter- oder Tastereinsatzes E angeordnet sind, dass das elektrische Gerät E2 an dem an der Dose D festgelegten Schalter- oder Tastereinsatz E positionsfixiert ist, indem die Schrauben des Schalter- oder Tastereinsatzes E in die metallischen Schraubdome des Befestigungsabschnitts DG greifen.

Die Erfindung ist anhand von Ausführungsbeispielen beschrieben. Ohne den Umfang der geltenden Ansprüche zu verlassen, ergeben sich für einen Fachmann zahlreiche weitere Möglichkeiten, diese umzusetzen, ohne dass dieses im Rahmen dieser Ausführungen im Einzelnen erläutert werden müsste.

### Bezugszeichenliste

- A: Aufsatz
- A1: erster Abschnitt
- A2: zweiter Abschnitt
- C: Anschlüsse
- D: Installationsdose
- DE, DG: Schraubdom
- E: Schalter- oder Tastereinsatz
- E2: elektrisches Gerät
- K: Befestigungskrallen
- V: Vertiefung

## Patentansprüche

1. Gebäudeinstallationsgerätesystem umfassend einen, auf einen in einer Dose (D) festgelegten Schalter- oder Tastereinsatz (E) aufsetzbaren, Aufsatz (A), sowie ein elektrisches Gerät (E2), das eine Energieversorgung, einen Sender und Detektionsmittel zur Erfassung der Schalt- beziehungsweise Tastbetätigung des Schalter- oder Tastereinsatzes (E) aufweist, **dadurch gekennzeichnet, dass** der Schalter- oder Tastereinsatz (E) einen unebenen Gehäuseboden mit einer Vertiefung (V) mit einem Vertiefungsvolumen von mindestens 2 cm³ aufweist und das elektrische Gerät (E2) einen ersten Abschnitt (A1) mit einem Abschnittsvolumen von mindestens 2 cm³ aufweist, welcher erste Abschnitt (A1) zu mindestens 80% seines Abschnittsvolumens in die Vertiefung (V) eintaucht.

2. Gebäudeinstallationsgerätesystem nach Anspruch 1, **dadurch gekennzeichnet, dass** an den ersten Abschnitt (A1) ein zweiter Abschnitt (A2) angrenzt, der nicht in die Vertiefung (V) eintaucht, und einen Absatz bezüglich des ersten Abschnitts ausbildet, so dass die Breite des zweiten Abschnitts (A2) größer als die Breite des ersten Abschnitts (A1) ist.

3. Gebäudeinstallationsgerätesystem nach Anspruch 1 oder 2, **dadurch gekennzeichnet, dass** das Vertiefungsvolumen eine Höhe von mindestens 2,5 mm, und eine Grundfläche von mindestens 8 cm² aufweist.

4. Gebäudeinstallationsgerätesystem nach einem der Ansprüche 1 bis 3, **dadurch gekennzeichnet, dass** das elektrische Gerät (E2) eine im Wesentlichen rechteckige Grundfläche mit abgerundeten Ecken und vier Seiten aufweist, wobei jede Seite maximal drei Anschlüsse (C) für den elektrischen Anschluss eines elektrischen Kabels aufweist.

5. Gebäudeinstallationsgerätesystem nach einem der Ansprüche 1 bis 4, **dadurch gekennzeichnet, dass** der Schalter- oder Tastereinsatz (E) über Befestigungskrallen (K), die mittels in metallischen Schraubdomen (DE) gelagerten Schrauben verstellbar sind, an der Dose festlegbar ist, und dass das elektrische Gerät (E2) einen Befestigungsabschnitt aufweist, wobei der Befestigungsabschnitt an den ersten Abschnitt (A1) angrenzt, und der Befestigungsabschnitt zwei metallische Schraubdome (DG) aufweist, die so in der Verlängerung der Schraubdome (DE) des Schalter- oder Tastereinsatzes (E) angeordnet sind, dass das elektrische Gerät (E2) an dem an der Dose (D) festgelegten Schalter- oder Tastereinsatz (E) positionsfixiert ist, indem die Schrauben des Schalter- oder Tastereinsatzes (E) in die metallischen Schraubdome (DE) des Befestigungsabschnitts greifen.

6. Gebäudeinstallationsgerätesystem nach Anspruch 5, **dadurch gekennzeichnet, dass** die metallischen Schraubdome (DG) des zweiten Abschnitts (A2) des elektrischen Gerätes (E2) wärmeleitend mit elektrischen Komponenten des elektrischen Gerätes (E2) verbunden sind und die metallischen Schraubdome (DE) des Schalter- oder Tastereinsatzes (E) zur Wärmeabführung kontaktieren.

7. Gebäudeinstallationsgerätesystem nach einem der Ansprüche 1 bis 6, **dadurch gekennzeichnet, dass** die Energieversorgung einen Energiespeicher umfasst.

8. Gebäudeinstallationsgerätesystem nach einem der Ansprüche 1 bis 6, **dadurch gekennzeichnet, dass** die Energieversorgung einen Phasenanschluss und einen Neutralleiteranschluss umfasst.

9. Gebäudeinstallationsgerätesystem nach einem der Ansprüche 1 bis 8, **dadurch gekennzeichnet, dass** das elektrische Gerät (E2) zur Beeinflussung einer Leuchte oder einer Jalousie geeignet ist.

## Geänderte Patentansprüche

### Geänderte Patentansprüche gemäss Regel 137(2) EPÜ.

1. Gebäudeinstallationsgerätesystem umfassend einen, auf einen in einer Dose (D) festgelegten Schalter- oder Tastereinsatz (E) aufgesetzten, Aufsatz (A), sowie ein elektrisches Gerät (E2), das eine Energieversorgung, einen Sender und Detektionsmittel zur Erfassung der Schalt- beziehungsweise Tastbetätigung des Schalter- oder Tastereinsatzes (E) aufweist, **dadurch gekennzeichnet, dass** der Schalter- oder Tastereinsatz (E) einen unebenen Gehäuseboden mit einer Vertiefung (V) mit einem Vertiefungsvolumen von mindestens 2 cm³ aufweist und das elektrische Gerät (E2) einen ersten Abschnitt (A1) mit einem Abschnittsvolumen von mindestens 2 cm³ aufweist, welcher erste Abschnitt (A1) zu mindestens 80% seines Abschnittsvolumens in die Vertiefung (V) eintaucht, wobei an den ersten Abschnitt (A1) ein zweiter Abschnitt (A2) angrenzt, der nicht in die Vertiefung (V) eintaucht, und einen Absatz bezüglich des ersten Abschnitts (A1) ausbildet, so dass die Breite des zweiten Abschnitts (A2) größer als die Breite des ersten Abschnitts (A1) ist.

2. Gebäudeinstallationsgerätesystem nach Anspruch 1, **dadurch gekennzeichnet, dass** das Vertiefungsvolumen eine Höhe von mindestens 2,5 mm, und eine Grundfläche von mindestens 8 cm² aufweist.

3. Gebäudeinstallationsgerätesystem nach einem der Ansprüche 1 bis 2, **dadurch gekennzeichnet, dass** das elektrische Gerät (E2) eine im Wesentlichen rechteckige Grundfläche mit abgerundeten Ecken und vier Seiten aufweist, wobei jede Seite maximal drei Anschlüsse (C) für den elektrischen Anschluss eines elektrischen Kabels aufweist.

4. Gebäudeinstallationsgerätesystem nach einem der Ansprüche 1 bis 3, **dadurch gekennzeichnet, dass** der Schalter- oder Tastereinsatz (E) über Befestigungskrallen (K), die mittels in metallischen Schraubdomen (DE) gelagerten Schrauben verstellbar sind, an der Dose festlegbar ist, und dass das elektrische Gerät (E2) einen Befestigungsabschnitt aufweist, wobei der Befestigungsabschnitt an den ersten Abschnitt (A1) angrenzt, und der Befestigungsabschnitt zwei metallische Schraubdome (DG) aufweist, die so in der Verlängerung der Schraubdome (DE) des Schalter- oder Tastereinsatzes (E) angeordnet sind, dass das elektrische Gerät (E2) an dem an der Dose (D) festgelegten Schalter- oder Tastereinsatz (E) positionsfixiert ist, indem die Schrauben des Schalter- oder Tastereinsatzes (E) in die metallischen Schraubdome (DE) des Befestigungsabschnitts greifen.

5. Gebäudeinstallationsgerätesystem nach Anspruch 4, **dadurch gekennzeichnet, dass** die metallischen Schraubdome (DG) des zweiten Abschnitts (A2) des elektrischen Gerätes (E2) wärmeleitend mit elektrischen Komponenten des elektrischen Gerätes (E2) verbunden sind und die metallischen Schraubdome (DE) des Schalter- oder Tastereinsatzes (E) zur Wärmeabführung kontaktieren.

6. Gebäudeinstallationsgerätesystem nach einem der Ansprüche 1 bis 5, **dadurch gekennzeichnet, dass** die Energieversorgung einen Energiespeicher umfasst.

7. Gebäudeinstallationsgerätesystem nach einem der Ansprüche 1 bis 5, **dadurch gekennzeichnet, dass** die Energieversorgung einen Phasenanschluss und einen Neutralleiteranschluss umfasst.

8. Gebäudeinstallationsgerätesystem nach einem der Ansprüche 1 bis 7, **dadurch gekennzeichnet, dass** das elektrische Gerät (E2) zur Beeinflussung einer Leuchte oder einer Jalousie geeignet ist.
